# EUROPÄISCHE PATENTSCHRIFT

(11) **EP 2 645 813 B1**
(45) Veröffentlichungstag und Bekanntmachung des Hinweises auf die Patenterteilung: **24.04.2024**
(21) Anmeldenummer: 13160901.8
(22) Anmeldetag: 25.03.2013
(51) Int. Cl.: H05B 6/06, A47J 39/00

(54) **Verfahren und Induktionsgerätemodul zum Erwärmen von Lebensmitteln**
Method and induction device module for heating articles of food
Procédé et dispositif modulaire à induction pour chauffer des aliments

(30) Priorität: 26.03.2012 DE 102012102575
(43) Veröffentlichungstag der Anmeldung: 02.10.2013
(73) Patentinhaber: HUPFER Metallwerke GmbH & Co. KG, 48653 Coesfeld (DE)
(72) Erfinder:
(74) Vertreter: Lorenz, Bernd Ingo Thaddeus

(56) Entgegenhaltungen:
- EP-A1- 0 591 760
- WO-A1-2004/077000
- WO-A1-2009/090152
- DE-A1-102007 036 334
- DE-A1-102009 009 842
- DE-T2- 69 632 370
- DE-T2- 69 632 370
- US-A- 4 764 652

## Beschreibung

Die Erfindung betrifft ein Verfahren zur Erwärmung von Lebensmitteln durch ein Induktionsgerätemodul, welches zumindest zwei Induktionsspulen und eine elektrische Schaltung umfasst, wobei zu Beginn des Erwärmungsvorganges bzw. vor dem Erwärmungsvorgang mittels einer Messbaugruppe eine Belegungserkennung erfolgt, bei der für jede der Induktionsspulen ermittelt wird, ob diese mit einem durch Induktion aufheizbaren Sekundärelement belegt ist und wobei nicht mit einem Sekundärelement belegte Induktionsspulen deaktiviert werden.

Gegenstand der Erfindung ist des Weiteren auch ein Induktionsgerätemodul mit zumindest zwei Induktionsspulen, die jeweils zur Erwärmung eines zugeordneten Sekundärelementes vorgesehen sind. Das Induktionsgerätemodul umfasst eine elektrische Schaltung zur Versorgung der Induktionsspulen mit einem Wechselstrom, wobei die elektrische Schaltung eine Wechselstromerzeugung, eine Steuerelektronik und eine Messbaugruppe aufweist und wobei die Messbaugruppe und die Steuerelektronik dazu eingerichtet sind, die Belegung der einzelnen Induktionsspulen mit einem zugeordneten Sekundärelement zu überprüfen.

Das Sekundärelement ist vorzugsweise eine leitende Schicht, bei der durch einen geeigneten spezifischen Widerstand die induzierten elektrischen Ströme in Wärme umgewandelt werden. Ein solches Sekundärelement kann beispielsweise durch eine resistiv leitende Schicht eines Lebensmittelgeschirrs gebildet sein. Neben Speisegeschirr wie Teller, Schalen und Schüsseln kann es sich auch um ein Trinkgefäß in Form eines Bechers oder einer Tasse handeln.

Im Cateringbereich sowie allgemein im Bereich der Verpflegung durch Großküchen ist es üblich, frische oder vorbereitete Speisen aufzuwärmen bzw. fertig zu garen und gegebenenfalls noch warm zu halten, bis die Speisen serviert und verzehrt werden. Eine Verpflegung durch Großküchen erfolgt beispielsweise in Altenheimen, Krankenhäusern, Schulen, Kindergärten oder dergleichen.

Beim Kochen und Warmhalten ("Cook & Hold") besteht der Nachteil, dass die Qualität der Speisen schnell nachlässt. Eine lange Lagerung im warmen Zustand ist aus hygienischer und ernährungsphysiologischer Sicht problematisch. Auch ein unerwünschtes Nachgaren kann nicht vermieden werden, so dass beispielsweise Fleisch zäh und Gemüse schlaff wird. Selbst bei einer zulässigen Lagerdauer im warmgehaltenen Zustand von bis zu 3 Stunden sind erhebliche Qualitätseinbußen wie Geschmacks-, Vitamin- und Farbverluste feststellbar. Des Weiteren besteht bei einem Kochen und Warmhalten das Problem, dass hinsichtlich der Bevorratung der Speisen, der möglichen Transportwege sowie der Handhabung unmittelbar vor dem Verzehr strenge logistische Vorgaben einzuhalten sind.

Um die beschriebenen Nachteile zu vermeiden, ist es bekannt, Speisen zunächst in Großküchen vorzubereiten bzw. nur teilweise zu garen, zu kühlen, und erst unmittelbar vor dem Verzehr zu regenerieren bzw. fertig zu garen. Neben dem Schockgefrieren vorbereiteter Speisen ist das sogenannte Cook & Chill-Verfahren bekannt, bei dem die Speisen direkt nach Ende des Teil-Garvorganges auf eine Temperatur von etwa 3 °C heruntergekühlt werden. In diesem Zustand sind die Speisen über einen längeren Zeitraum von bis zu einigen Tagen lagerfähig, ohne dass diese wesentlich an Qualität verlieren. Entsprechend können die vorbereiteten Speisen auch ohne Weiteres über größere Distanzen transportiert werden. Vor diesem Hintergrund ergibt sich sowohl bei dem Schockgefrieren (Cook & Freeze) sowie bei dem Cook & Chill-Verfahren eine verbesserte Effizienz der Herstellung, wobei aber gleichzeitig auch höherwertige und gesündere Speisen bereitgestellt werden können. Allerdings müssen die Speisen dann unmittelbar vor dem Verzehr regeneriert werden.

Bei der als Regenerierung bezeichneten Erwärmung werden die Speisen in der Regel nicht nur aufgewärmt, sondern auch fertig gegart. Es können damit Speisen und Speisezusammenstellungen bereitgestellt werden, die in ihrer Qualität und ihrem Aussehen frisch zubereiteten und direkt servierten Produkten in etwa entsprechen.

Um eine punktgenaue Garung verschiedener Bestandteile einer Speisezusammenstellung zu erreichen, können die einzelnen Komponenten auch zu einem unterschiedlichen Grad vorgegart sein, damit dann sämtliche Produkte nach der Regenerierung einen optimalen Garzustand aufweisen.

Vor diesem Hintergrund ist es bereits ersichtlich, dass die Art der Regenerierung für die optimale Qualität der einzelnen Lebensmittelportionen ausschlaggebend ist.

Der Transport gekühlter Speisen erfolgt üblicherweise in Thermotransportbehältern, Tabletttransportwagen oder dergleichen. Derartige Behälter können direkt mit einer Heizquelle versehen sein, um die Regenerierung der Speisen zu ermöglichen. Besonders vorteilhaft ist aber eine Ausgestaltung, bei der einfache Tabletttransport- bzw. Servierwagen an eine feststehende Heizeinrichtung gekoppelt werden.

Für die Regenerierung sind in der Praxis unterschiedliche Verfahren bekannt. Die Erwärmung kann beispielsweise durch einen direkten Thermokontakt, eine Umluftheizung oder aber durch Induktion erfolgen. Bei der Erwärmung durch Induktion wird ein Induktionsgerät mit einer Vielzahl von Induktionsspulen bereitgestellt, die in das eingangs beschriebene Sekundärelement eine Wechselspannung induzieren. Durch die Aufheizung mittels Induktion ist kein direkter Materialkontakt notwendig, so dass Geschirr mit einer resistiv leitenden Schicht als Sekundärelement auch durch ein Tablett hindurch erwärmt werden kann. Während bei einer Heizung durch Umluft der gesamte Umgebungsraum aufgewärmt wird und sich entsprechend ein schlechter Wirkungsgrad ergibt, erfolgt bei einer Erwärmung durch Induktion nur eine Aufheizung des Geschirrs selbst. Neben einer deutlich besseren Energieeffizienz ist auch die Handhabung erleichtert, weil nur das entsprechend ausgerüstete Geschirr und nicht die Serviertabletts sowie die Umgebung stark erhitzt werden. Im Gegensatz zu einer Umluftheizung kann durch Induktion auch eine gezieltere Aufwärmung in einem Tabletttransportwagen oder Servierwagen erfolgen. So können beispielsweise auch Beilagen, Getränke, Süßspeisen oder dergleichen vorgesehen sein, die nicht auf einem Geschirr mit Sekundärelement angeordnet sind und entsprechend nicht stark erhitzt werden. Die Frequenz des Wechselstroms beträgt üblicherweise zwischen 20 und 50 kHz.

Ein Verfahren zur Erwärmung von Lebensmitteln durch ein Induktionsmodul sowie ein Induktionsmodul mit den eingangs beschriebenen Merkmalen sind aus der DE 696 32 370 T2 bekannt. Eine Vielzahl von Induktionsspulen ist an einen Hochfrequenzgenerator angeschlossen, wobei eine Messbaugruppe vorgesehen ist, um eine Belegungserkennung zu ermöglichen. Eine Induktionsspule ist im Sinne der vorliegenden Erfindung mit einem durch Induktion aufheizbaren Sekundärelement belegt, wenn das Sekundärelement derart an die zugeordnete Induktionsspule angenähert ist, dass eine Energieübertragung erfolgen kann. Auch wenn das Sekundärelement üblicherweise oberhalb der zugeordneten Induktionsspule angeordnet ist, sind auch andere Anordnungen denkbar. So beschreibt die DE 696 32 370 T2 auch die Anordnung von Induktionsspulen oberhalb eines zu erwärmenden Sekundärelementes. Wenn gemäß der DE 696 32 370 T2 eine Induktionsspule bzw. eine Gruppe von Induktionsspulen nicht mit einem Sekundärelement belegt ist, wird diese Induktionsspule bzw. Gruppe von Induktionsspulen deaktiviert. Dadurch können sowohl eine Beschädigung der elektrischen Schaltung als auch Energieverluste vermieden werden.

Aus der EP 1 752 073 B1 ist eine Vorrichtung zum induktiven Erwärmen von mehreren mit einer leitfähigen Schicht versehenen Geschirrelementen bekannt, welche bei einer Parallelschaltung mehrerer Induktionsspulen den zugeführten Strom bestimmt und auf der Basis dieses Messwertes einen Leistungskorrekturfaktor festlegt. Wenn beispielsweise nur ein Teil der Induktionsspule mit einem Sekundärelement belegt ist, ist auch der Gesamtstrom reduziert, wobei gemäß der EP 1 752 073 B1 ein geeigneter Korrekturfaktor vorgesehen wird.

In der Praxis wird beobachtet, dass bei der gleichzeitigen Regenerierung mehrerer Speisen gewisse Qualitätsunterschiede zwischen den Portionen auftreten können. Beispielsweise können sich Abweichungen ergeben, wenn die den unterschiedlichen Induktionsspulen zugeordneten Sekundärelemente aufgrund von Produktionsschwankungen oder Beschädigungen etwas unterschiedliche Eigenschaften aufweisen und sich deshalb bei einer Beaufschlagung der Induktionsspulen mit einem Wechselstrom unterschiedlich stark erwärmen. Zu einer unterschiedlich starken Erwärmung kann es auch kommen, wenn die Sekundärelemente bezüglich der jeweils zugeordneten Induktionsspule unterschiedlich angeordnet sind, wenn also beispielsweise der Abstand zwischen Induktionsspule und Sekundärelement unterschiedlich ist oder wenn die Sekundärelementen gegenüber der jeweils zugeordneten Spule seitlich verschoben sind. Darüber hinaus führen auch Gewichtsschwankungen bei der Portionierung zu einer unterschiedlichen Wärmekapazität der Speisezusammenstellung und damit zu einer unterschiedlich starken Erwärmung.

Vor diesem Hintergrund liegt der vorliegenden Erfindung die Aufgabe zugrunde, ein Verfahren sowie ein Induktionsgerätemodul zum Erwärmen von Lebensmitteln anzugeben, welche sich durch eine verbesserte Energieeffizienz und eine noch höhere Qualität der erwärmten Lebensmittel auszeichnet.

Ausgehend von einem Verfahren mit den Merkmalen des Oberbegriffes des Patentanspruches 1 wird die Aufgabe erfindungsgemäß dadurch gelöst, dass zusätzlich zu der Belegungserkennung zu Beginn des Erwärmungsvorgangs oder vor dem Erwärmungsvorgang für jede der mit einem Sekundärelement belegten Induktionsspulen für zumindest einen elektromagnetischen Parameter mittels der Messbaugruppe eine Abweichung von einem Sollwert bestimmt wird, wobei die Ansteuerung der jeweiligen Induktionsspule abhängig von der Abweichung von dem Sollwert korrigiert wird.

Um festzustellen, ob eine bestimmte Induktionsspule mit einem zugeordneten, durch Induktion aufheizbaren Sekundärelement belegt ist, wird ein charakteristischer elektromagnetischer Parameter, je nach Ansteuerung der Spulen beispielsweise der Strom und/oder die Spannung, für die jeweilige Induktionsspule ermittelt. Die Messung kann direkt an der Spule oder auch vorgelagert, beispielsweise an den Zuleitungen oder einer der Spule zugeordneten Endstufe erfolgen. Für den zumindest einen zu überwachenden Parameter wird dabei ein Toleranzbereich festgelegt, indem bei der Belegungserkennung eine Belegung bestätigt wird. Dadurch wird erreicht, dass auch bei Produktionsschwankungen der Sekundärelemente, bei einer leichten Fehlausrichtung oder bei einer leichten Beschädigung des jeweiligen Sekundärelementes die Belegung bestätigt wird, auch wenn keine optimalen Bedingungen für die induktive Kopplung vorliegen. Gleichzeitig wird im Rahmen der Erfindung auch ein Vergleich des ermittelten Parameters mit einem Sollwert durchgeführt, wobei der Sollwert einer vorgegebenen Anordnung und Ausgestaltung des Sekundärelementes entspricht. Bei einer Abweichung von dem Sollwert wird die Ansteuerung der jeweiligen Induktionsspule derart korrigiert, dass dennoch eine vorgesehene Aufwärmung erreicht werden kann. Wenn beispielsweise die induktive Einkopplung durch einen etwas zu großen Abstand zwischen dem Sekundärelement und der zugeordneten Induktionsspule beeinträchtigt ist, kann durch eine Erhöhung des Spulenstroms erreicht werden, dass dennoch eine vorgegebene Heizleistung erreicht wird. Produktschwankungen von Geschirrteilen, Fehlausrichtungen sowie leichte Beschädigungen der Sekundärelemente können so kompensiert werden, wodurch für jede Lebensmittelportion ein genau vorgegebenes Erwärmungsprofil über die Dauer des Erwärmungsvorganges eingehalten werden kann.

Die Belegungserkennung sowie die Abweichung von dem Sollwert können zu Beginn des Erwärmungsvorganges oder auch vor dem Erwärmungsvorgang durchgeführt werden, wodurch der Zustand der Sekundärelemente bzw. der mit den Sekundärelementen versehenen Geschirrteile festgestellt werden kann.

Darüber hinaus ist gemäß einer bevorzugten Ausgestaltung der Erfindung vorgesehen, für jede mit einem Sekundärelement belegten Induktionsspule zumindest einen elektromagnetischen Parameter mittels der Messbaugruppe während des Erwärmungsvorganges mehrfach zu bestimmen, wobei abhängig von dem gemessenen Parameter der Induktionsspule eine variable elektrische Leistung zugeführt wird.

Durch das zeitlich dynamische Verhalten des zumindest einen Parameters sind Rückschlüsse auf die Temperatur des Sekundärelementes bzw. der entsprechenden Speisen und damit auch indirekt auf die Menge der aufgelegten Speisen möglich. So nimmt mit zunehmender Temperatur des Sekundärelementes üblicherweise auch der Widerstand zu, so dass sich die elektromagnetischen Parameter, d. h. das Verhältnis von Spannung und Stromstärke bei gleicher elektrischer Leistung verändern. Wenn die Ausgangstemperatur bekannt ist oder in etwa abgeschätzt werden kann, kann während des Erwärmungsvorganges auch die momentane Temperatur aus den gemessenen Werten abgeleitet werden. Indirekt kann damit auch die Menge der Lebensmittelportion abgeschätzt werden. So nimmt bei einer Lebensmittelportion die gesamte Wärmeaufnahmekapazität mit zunehmender Menge proportional zu. Bei einer gleichen Heizleistung erfolgt der Temperaturanstieg entsprechend langsamer. Demnach ist auch die zeitliche Veränderung des mit der Messbaugruppe bestimmten Parameters weniger steil.

Teilweise kann aus dem zeitlichen Verlauf der gemessenen Parameter auch eine absolute Temperatur abgeschätzt werden. So wird bei Phasenübergängen von Eis zu Wasser bei 0° sowie von Wasser zu Dampf bei etwa 100° bei dem Vorliegen eines Phasengleichgewichtes keine Temperaturerhöhung beobachtet, weil die Heizleistung in Form von latenter Wärme in Schmelzenergie bzw. Verdampfungsenergie umgewandelt wird. In dem gemessenen Parameter führt die zeitweise in etwa gleichbleibende Temperatur zu einem Plateau bzw. zu einer flachen steigenden Kurve.

In einer Ausführungsform, die nicht Teil der vorliegenden Erfindung ist, ist es auch möglich, dass für jede zu erwärmende Speiseportion, also für jedes aufheizbare Sekundärelement eine individuelle Temperaturmessung erfolgt. So kann beispielsweise vor Beginn des Erwärmungsvorganges eine kontaktlose Temperaturmessung durch ein InfrarotThermometer erfolgen, um den Ausgangspunkt für den Erwärmungsvorgang zuverlässig zu bestimmen. Darüber hinaus kann eine Temperaturmessung aber auch unmittelbar an dem Sekundärteil, an einem Lebensmittelgeschirr, welches mit dem Sekundärteil versehen ist, oder direkt an der zugeordneten Lebensmittelportion erfolgen. An dem Sekundärteil oder dem Lebensmittelgeschirr kann beispielsweise ein integrierter Temperaturmesskreis vorgesehen sein, der kontaktlos ausgelesen werden kann. Denkbar ist beispielsweise ein Schwingkreis, dessen Frequenz über einen temperaturabhängigen Widerstand veränderbar ist. Ein solcher Temperaturmesskreis kann dann mit einem Lesegerät ausgelesen werden. Die Temperaturmessung kann je nach Ausgestaltung des Temperaturmesskreises in regelmäßigen Abständen wiederholt werden oder auch fortlaufend erfolgen.

Die Sekundärelemente sind vorzugsweise in das Geschirrteil, z. B. einen Tellerboden integriert. Geeignete Geschirrteile sind beispielsweise aus der EP 2 127 574 B1 bekannt. Das in das Geschirrteil integrierte Sekundärelement weist üblicherweise eine Dicke von weniger als 1 mm auf. Bei gut leitenden Materialien wie einer Schicht aus Silber, kann die Dicke beispielsweise lediglich zwischen 20 µm und 50 µm betragen.

Im Rahmen der Erfindung kann das Induktionsgerätemodul in einem Tabletttransport- oder Servierwagen fest eingebaut sein, wie es aus der EP1 752 073 B1 bekannt ist. Gemäß einer bevorzugten Ausgestaltung werden aber nur die Geschirrteile in einem Tabletttransportwagen auf Tabletts bereitgestellt, wobei der Tabletttransportwagen mit dem Induktionsmodul gekoppelt wird. Eine solche Ausgestaltung ist in der DE 696 32 370 T2 beschrieben. Es ergibt sich der Vorteil, dass der Tabletttransportwagen, der auch bei dem Transport erheblichen Erschütterungen ausgesetzt sein kann, besonders einfach und kostengünstig auszuführen ist. Bei einer feststehenden Anordnung des Induktionsgerätemoduls ist die Gefahr von mechanischen Beschädigungen dieser vergleichsweise komplexen, hochwertigen Anordnung deutlich verringert. So kann beispielsweise die Station eines Krankenhauses mit einem Induktionsgerätemodul oder einem aus mehreren Induktionsgerätemodulen gebildeten Induktionsgerät versehen sein, wobei dann die vorbereiteten Speisen in gekühlter Form in dem Tabletttransportwagen auf Tabletts bereitgestellt werden und wobei diese frei beweglichen Tabletttransportwagen dann an das Induktionsgerätemodul bzw. an das Induktionsgerät angeschlossen werden. Der Tabletttransportwagen kann nach dem Erwärmen auch dazu benutzt werden, um bei der Verteilung der erwärmten Speisen von Zimmer zu Zimmer gefahren zu werden.

Bei den beschriebenen Cook & Chill- oder Cook & Freeze-Verfahren ergibt sich der Vorteil, dass bei der Anordnung in einem ausreichend isolierten Behälter die Speisen über einen längeren Zeitraum im kalten Zustand bereitgehalten werden können. So können die Speisen beispielsweise in einem Tabletttransportwagen morgens oder im Laufe des Vormittags angeliefert werden, um dann zu einem vorbestimmten Ausgabezeitraum aufgewärmt bzw. regeneriert zu werden. So ist gemäß einer bevorzugten Ausgestaltung der Erfindung vorgesehen, dass nach der Anordnung der Geschirrteile jeweils in der Reichweite einer zugeordneten Induktionsspule und vor dem Beginn des Erwärmungsvorganges eine Pause von üblicherweise zumindest einer Stunde vorgesehen ist. Bei einer solchen Zwischenlagerung der vorbereiteten Speisen empfiehlt es sich jedoch die Belegungserkennung unmittelbar zu Beginn der Pause durchzuführen. Im Rahmen der Belegungserkennung kann die Anzahl der funktionsfähigen Sekundärelemente und damit üblicherweise auch die Anzahl der Speisenzusammenstellungen überprüft werden. Wenn eine Speise fehlt oder wenn ein Sekundärelement außerhalb des Toleranzbereiches der Belegungserkennung liegt, kann durch die frühzeitige Erkennung noch ein Ersatz beschafft werden.

Darüber hinaus ist es auch denkbar abhängig von der Anzahl der Lebensmitteportionen unterschiedliche Erwärmungsmodi vorzusehen. So ist bei einer vollen Belegung darauf zu achten, dass eine vorgegebene Gesamtleistung des gesamten Induktionsgerätemoduls bzw. eines aus mehreren Induktionsgerätemodulen gebildeten Induktionsgerätes nicht überschritten wird.

Mit der im Rahmen der Erfindung vorgesehenen elektrischen Schaltung kann eine zur Verfügung stehende Gesamtleistung derart auf die vorhandenen Sekundärelemente aufgeteilt werden, dass eine gleichmäßige Erwärmung gewährleistet ist. Bei einer nicht vollständigen Belegung steht für jede mit einem Sekundärelement belegte Induktionsspule ein größerer Anteil der Leistung zur Verfügung, so dass gegebenenfalls eine schnellere Aufheizung, d. h. ein kürzerer Erwärmungsvorgang möglich ist. In vielen Fällen wird aber unabhängig von dem Grad der Belegung ein gleichbleibender Erwärmungsvorgang vorgesehen, um unter allen Umständen eine optimale Zubereitung der Speisen zu gewährleisten.

Gemäß einer Weiterbildung der vorliegenden Erfindung ist vorgesehen, dass die Sekundärelemente bzw. die damit versehenen Geschirrteile eine individuelle Codierung aufweisen, so dass diese mit einem entsprechenden Lesegerät individuell erkannt werden können.

Im Rahmen einer solchen Weiterbildung besteht auch die Möglichkeit, dass die jeweils einem Sekundärelement zugeordneten Speisen, also Speisen die von dem entsprechenden Geschirrteil aufgenommen sind, bei einer Portionierung in einer zentralen Steuereinrichtung mit der jeweiligen Codierung verknüpft werden, wobei die zentrale Steuerung nachfolgend bei dem Erwärmungsvorgang anhand der Codierung eine für die jeweiligen Speisen angepasste Erwärmung mittels der Induktionsspulen bewirkt. Die Codierung kann beispielsweise durch einen RFID-Chip oder als Barcode erfolgen. Die Zuordnung eines bestimmten codierten Geschirrteils zu einer bestimmten Induktionsspule kann dadurch erfolgen, dass das entsprechende Geschirrteil gezielt auf eine zugeordnete Induktionsspule aufgelegt wird bzw. in dessen Wirkungsbereich gebracht wird. Darüber hinaus ist es aber auch möglich die Codierung erst später auszulesen, wenn die Lebensmittelportionen mit den jeweils zugeordneten Sekundärelementen an den Induktionsspulen des Induktionsmoduls angeordnet sind.

Anhand der Codierung können auch unterschiedliche Geschirrtypen erkannt werden, wobei gegebenenfalls auch unterschiedliche Sollwerte für den mit der der Messbaugruppe zu bestimmenden elektromagnetischen Parameter zugrunde gelegt werden können. Wenn schließlich ein Geschirrteil bei der Belegungserkennung als fehlerhaft erkannt wird, kann dieses auch automatisch anhand seiner Codierung aussortiert werden.

Den mit einem Sekundärelement belegten Induktionsspulen wird während des Erwärmungsvorganges jeweils eine elektrische Leistung von typischerweise zwischen 10 Watt und 200 Watt zugeführt. Die den einzelnen Induktionsspulen im Mittel zugeführte elektrische Leistung kann beispielsweise durch eine Pulsweitenmodulation verändert werden.

Grundsätzlich können im Rahmen der Erfindung auch unterschiedliche Geschirrteile eingesetzt werden, die auch für eine unterschiedliche Leistungsaufnahme vorgesehen sind. So können die Geschirrteile beispielsweise an die Wärmekapazität des aufgelegten Lebensmittel angepasst sein, um bei einer Speisenzusammenstellung mit verschiedenen Speisen ebenfalls eine gleichmäßige Erwärmung zu erreichen.

Des Weiteren können die zumindest zwei Induktionsspulen des Induktionsgerätemoduls gleich oder auch unterschiedlich sein. So können beispielsweise zwei unterschiedliche Typen von Induktionsspulen vorgesehen werden, welche auch für die Abgabe unterschiedlicher Leistungen eingerichtet sind. Denkbar ist beispielsweise auf einem Tablett mit zwei Spulen einen Teller mit einer großen Induktionsspule und eine Suppentasse bzw. -schale mit einer kleineren Induktionsspule aufzuwärmen. Gegebenenfalls sind für unterschiedliche Spulen bzw. unterschiedliche Geschirrteile auch unterschiedliche Sollwerte festzulegen.

Gegenstand der Erfindung ist auch ein Induktionsgerätemodul, welches insbesondere zur Durchführung des zuvor beschriebenen Verfahrens geeignet ist und eine Vielzahl von Induktionsspulen aufweist, die jeweils zur Erwärmung eines zugeordneten Sekundärelementes, insbesondere eines Lebensmittelgeschirrs, vorgesehen sind, wobei das Induktionsgerätemodul eine elektrische Schaltung zur Versorgung der Induktionsspulen mit einem Wechselstrom aufweist, wobei die elektrische Schaltung eine Wechselstromerzeugung, eine Steuerelektronik und eine Messbaugruppe umfasst und wobei die Messbaugruppe und die Steuerelektronik dazu eingerichtet sind, die Belegung der einzelnen Induktionsspulen mit einem zugeordneten Sekundärelement zu überprüfen.

Das erfindungsgemäße Induktionsgerät ist dadurch gekennzeichnet, dass jeder Induktionsspule eine eigene Endstufe vorgeschaltet ist, wobei die elektrische Schaltung zu einer unterschiedlichen Ansteuerung der einzelnen Induktionsspulen eingerichtet ist.

Erfindungsgemäß weist das gesamte Induktionsgerätemodul mit mehreren Induktionsspulen eine elektrische Schaltung mit einer gemeinsamen Steuerelektronik für sämtliche Spulen auf, wobei vorzugsweise auch die Erzeugung einer Wechselspannung sowie die Ansteuerung der einzelnen Endstufen von einer gemeinsamen Bauteilanordnung erfolgt. Vorzugsweise ist auch nur eine Messbaugruppe vorgesehen, die eine Überwachung sämtlicher Induktionsspulen ermöglicht.

Die Ansteuerung der einzelnen Induktionsspulen bzw. die Messung zumindest eines elektromagnetischen Parameters für die einzelnen Spulen kann durch eine Art Multiplexing-Verfahren erfolgen.

Als Endstufe ist üblicherweise ein Transistor, insbesondere ein Bipolartransistor mit isolierter Gate-Elektrode (IGBT) oder ein Metall-Oxid-Halbleiter-Feldeffekttransistor (MOSFET) vorgesehen.

Gemäß einer bevorzugten Ausgestaltung der Erfindung umfasst das Induktionsgerätemodul sechs oder acht Induktionsspulen. Im Rahmen einer solchen Ausgestaltung können übliche Microkontroller eingesetzt werden, die häufig über eine entsprechende Anzahl an Kanälen verfügen.

Zweckmäßigerweise umfasst das Induktionsgerätemodul auch eine Eingabeschnittstelle und/oder eine Ausgabeschnittstelle, um eine Kommunikation mit einem Benutzer bzw. mit einer übergeordneten Steuerung zu ermöglichen. Neben elektronischen Ein- und Ausgabeschnittstellen sind auch Anzeigeelemente, ein Bedien-Panel oder dergleichen möglich.

Die Eingabeschnittstelle ermöglicht beispielsweise die Vorgabe unterschiedlicher Leistungskurven für verschiedene Lebensmittelzusammenstellung. Wie bereits zuvor erläutert kann auch eine individuelle Codierung der einzelnen Sekundärelemente bzw. der damit ausgerüsteten Geschirrteile erfolgen. Auch dann ist eine Kommunikation mit einer übergeordneten Steuerung notwendig, um die entsprechenden Informationen verarbeiten zu können.

Schließlich ist bei der Verpflegung aus Großküchen häufig auch eine vollständige Dokumentation zur Qualitätssicherung notwendig. Wenn beispielsweise gesundheitliche Beeinträchtigungen der mit den regenerierten Speisen versorgten Personen auftreten, ist auszuschließen, dass diese Beeinträchtigungen auf eine möglicherweise unzureichende oder fehlerhafte Erwärmung zurückzuführen sind. Gemäß dem Stand der Technik kann eine entsprechende Feststellung nicht mit Sicherheit getroffen werden, weil nicht für jede Kombination aus Induktionsspule und zugeordnetem Sekundärelement bzw. der zugeordneten Speisezusammenstellung die genauen Parameter während der Erwärmung bekannt sind. Im Gegensatz dazu ermöglicht die vorliegende Erfindung eine gezielte Einzelplatz-Steuerung und -Überwachung. Es kann so auch für jede einzelne Speisezusammenstellung genau dokumentiert werden, dass eine ordnungsgemäße Erwärmung erfolgte. Entsprechende Dokumentationsdaten können auch über einen gewissen Zeitraum gespeichert oder eine übergeordnete Steuerung übergeben werden. Schließlich besteht bei einem Anschluss des Induktionsgerätemoduls an ein Netzwerk auch die Möglichkeit einer Fernsteuerung oder Fernwartung.

Zweckmäßigerweise sind die Induktionsspulen jeweils an einen Resonanzkreis zur Impedanzanpassung angeschlossen. Dabei liegt es im Rahmen der Erfindung, dass der Resonanzkreis manuell, beispielsweise bei einer Wartung, oder auch automatisch durch entsprechende Stellglieder abstimmbar ist, um die Leistungseinkopplung zwischen der Induktionsspule und dem jeweils zugeordneten Sekundärelement zu optimieren.

Das beschriebene Induktionsgerätemodul stellt hinsichtlich der Spannungsversorgung und Steuerung der einzelnen Induktionsspulen eine Einheit dar. Wie bereits beschrieben kann ein Induktionsmodul beispielweise sechs oder acht Induktionsspulen aufweisen. Abhängig von den jeweiligen Erfordernissen können mehrere Induktionsgerätemodule zu einem übergeordneten Induktionsgerät zusammengefasst werden. Die Gesamtzahl der Induktionsspulen eines solchen Induktionsgerätes ist dann vorzugsweise ein Vielfaches von sechs bzw. acht.

Die Datenübertragung der elektrischen Schaltung innerhalb des Induktionsgerätemoduls sowie zu einer übergeordneten Steuerung kann über ein geeignetes Bus-System z.B. über das CAN-Bus-Protokoll erfolgen.

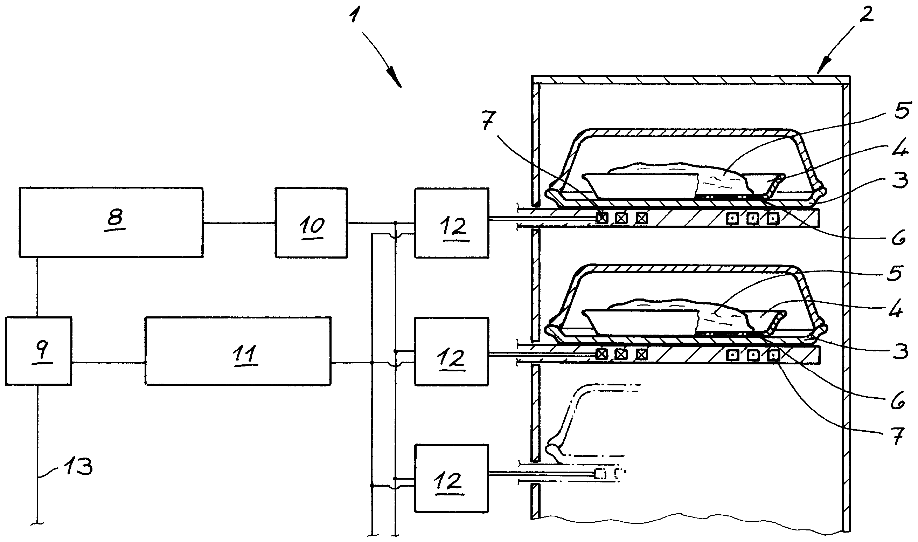

Die einzige Figur zeigt in einer schematischen Darstellung ein Induktionsgerätemodul mit einem daran angekoppelten Tabletttransportwagen.

Die einzige Figur zeigt in einer stark schematisierten Ansicht ein Induktionsgerätemodul 1, welches an einen Tabletttransportwagen 2 angeschlossen ist. In dem Tabletttransportwagen 2 sind übereinander mehrere Tabletts 3 angeordnet, die jeweils einen Teller 4 aufnehmen. Auf jedem Teller 4 befindet sich eine Lebensmittelportion 5. Die Teller 4 sind dazu vorgesehen induktiv erwärmt zu werden, wozu an der Unterseite der Teller 4 eine leitfähige Beschichtung als Sekundärelement 6 aufgebracht ist.

Die Lebensmittelportionen 5 werden vorzugsweise gekühlt bereitgestellt und können sowohl nach dem Cook & Chill-Verfahren oder dem Cook & Freeze-Verfahren hergestellt sein. Üblicherweise sind die Lebensmittelportionen dabei nur vorgegart, wobei ein Fertiggaren während der Regeneration durch induktive Erwärmung erfolgt. Grundsätzlich können das erfindungsgemäße Verfahren und das erfindungsgemäße Induktionsgerätemodul auch im Rahmen eines sogenannten Cook & Serve-Verfahrens eingesetzt werden, bei dem fertig gekochte Speisen heiß serviert werden sollen. Dabei kann sich das Problem ergeben, dass die Speisen durch eine Lagerung, beispielsweise aufgrund eines Transportes, eine zu große Temperaturabsenkung erfahren haben. Durch die induktive Erwärmung kann dann ein Nachwärmen der Speisen auf Solltemperatur erfolgen.

Zur Erwärmung ist gemäß der einzigen Figur das Induktionsgerätemodul vorgesehen, welches für jedes Sekundärelement 6 eine Induktionsspule 7 aufweist. Das Induktionsgerätemodul 1 umfasst des Weiteren eine elektrische Schaltung zur Versorgung der Induktionsspulen 7 mit einem Wechselstrom, wobei die elektrische Schaltung ein Netzteil 8 mit einem Netzfilter, eine Kommunikationseinheit 9, eine Messbaugruppe 10 und eine Ansteuereinheit 11 zur Ansteuerung der einzelnen Induktionsspulen 7 aufweist.

Jeder Induktionsspule 7 ist eine Endstufe 12 mit einem Resonanzkreis vorgeschaltet. Die Endstufe umfasst vorzugsweise einen Bipolartransistor mit isolierter Gate-Elektrode (IGBT) oder einen Metall-Oxid-Halbleiter-Feldeffekttransistor (MOSFET). Der Resonanzkreis ist dazu vorgesehen, die Ankopplung zwischen den Induktionsspulen 7 und den jeweils zugeordneten Sekundärelementen 6 zu optimieren.

Die Ansteuereinheit 11 wertet die Messsignale der Messbaugruppe 10 für die verschiedenen Induktionsspulen 7 aus und erzeugt eine Wechselspannung, mit der die Endstufen 12 individuell angesteuert werden. Eine Leistungsanpassung der einzelnen Endstufen 12 kann durch eine Pulsweitenmodulation erfolgen.

Die elektrische Schaltung ist zur unterschiedlichen Ansteuerung der einzelnen Induktionsspulen 7 eingerichtet. Die Messbaugruppe 10 ermöglicht zunächst eine Belegungserkennung. Dabei wird überprüft, ob an den Induktionsspulen 7 jeweils ein zugeordnetes Sekundärelement 6 vorhanden ist. Dazu wird mit der Messbaugruppe 10 der Strom und die Spannung gemessen und eine Belegung bestätigt, wenn diese Parameter in einem vorgegebenen zulässigen Bereich sind.

Zusätzlich erfolgt aber auch ein Vergleich der gemessenen Parameter mit einem Sollwert, wobei dann abhängig von der Abweichung von dem Sollwert eine Korrektur vorgenommen wird. Die Sollwerte entsprechen den zu erwartenden Parametern bei einer korrekten Ausrichtung der Sekundärelemente 6 gegenüber den Induktionsspulen 7 sowie eine Übereinstimmung der Sekundärelemente 6 mit Vorgabewerten.

In der Praxis unterliegen die Sekundärelemente bzw. die damit ausgerüsteten Geschirrteile gewissen Produktionsschwankungen, wobei sich auch über die Zeit die elektromagnetischen Eigenschaften der Sekundärelemente 6 in einem gewissen Maße verändern können. Bei einer Abweichung der gemessenen Parameter von den Sollwerten wird eine korrigierte Ansteuerung durchgeführt, so dass trotz der Abweichung genau die vorgegebene Heizleistung eingespeist wird. Auf diese Weise kann eine ordnungsgemäße Erwärmung sämtlicher Lebensmittelportionen 5 erreicht werden. Darüber hinaus kann diese gleichmäßige Erwärmung auch zuverlässig dokumentiert werden. Es ist ausgeschlossen, dass ein vollständiger Ausfall eines Sekundärelementes 6 oder eine Fehlbelegung unerkannt bleiben.

Die Belegungserkennung erfolgt vorzugsweise unmittelbar, wenn der Tabletttransportwagen 2 mit dem Induktionsgerätemodul 1 gekoppelt wird. Etwaige Fehler können dann direkt angezeigt oder an eine übergeordnete Steuerung übertragen werden, um gegebenenfalls unmittelbar eine Korrektur vorzunehmen. In der einzigen Figur ist angedeutet, dass die Kommunikationseinheit 9 über eine Steuerleitung 13 an eine externe Steuerung angeschlossen sein kann.

Neben einer erstmaligen Belegungserkennung mittels der Messbaugruppe 10 können der Strom und die Spannung auch während des Erwärmungsvorganges bestimmt werden. Aus der Änderung der Parameter können dann beispielsweise Rückschlüsse auf die Temperatur bzw. die Temperaturänderung gezogen werden. Anhand dieser Messwerte ist also eine weitere Steuerung möglich. In einer Ausführungsform, die nicht Teil der vorliegenden Erfindung ist, ist es auch möglich eine direkte Temperaturmessung an den Tellern 4, den Sekundärelementen 6 oder auch unmittelbar den Lebensmittelportionen 5 vorzunehmen, um den Erwärmungsprozess noch weiter zu überwachen und zu optimieren.

Das Induktionsgerätemodul 1 stellt eine funktionelle Einheit dar und kann beispielsweise acht Induktionsspulen 7 aufweisen. Dabei liegt es im Rahmen der Erfindung, dass mehrere Induktionsgerätemodule zusammen ein Induktionsgerät bilden, welches dann vorzugsweise 16, 24, 32 oder 40 Induktionsspulen 7 aufweist. Wenn das Induktionsgerätemodul 1 sechs Induktionsspulen umfasst, weist das gesamte Induktionsgerät bevorzugt 12, 18, 24, 30 oder 36 Induktionsspulen auf.

Das beschriebene Ausführungsbeispiel bezieht sich exemplarisch auf eine Ausgestaltung, bei der das Induktionsgerät mit einem Tabletttransportwagen gekoppelt wird. Es ergibt sich dabei der Vorteil, dass der Tabletttransportwagen, der auch bei dem Transport erheblichen Erschütterungen ausgesetzt sein kann, besonders einfach und kostengünstig auszuführen ist. Insbesondere können auch unterschiedliche Tabletttransportwagen mit dem Induktionsgerät gekoppelt werden, wodurch sich logistische Vorteile ergeben. Selbstverständlich kann im Rahmen der Erfindung das Induktionsgerät aber auch in einen Tabletttransportwagen integriert sein.

## Patentansprüche

1. Verfahren zum Erwärmen von Lebensmitteln durch ein Induktionsgerätemodul (1), welches zumindest zwei, jeweils zur Erwärmung eines zugeordneten Sekundärelementes (6) vorgesehen Induktionsspulen (7) und eine elektrische Schaltung umfasst,
wobei mittels einer Messbaugruppe (10) eine Belegungserkennung erfolgt, bei der für jede der Induktionsspulen (7) ermittelt wird, ob diese mit einem durch Induktion aufheizbaren Sekundärelement (6) belegt ist, und
wobei nicht mit einem Sekundärelement (6) belegte Induktionsspulen (7) deaktiviert werden,
wobei
zusätzlich zu der Belegungserkennung zu Beginn des Erwärmungsvorganges oder vor dem Erwärmungsvorgang für jede der mit einem Sekundärelement (6) belegten Induktionsspule (7) und für zumindest einen elektromagnetischen Parameter mittels der Messbaugruppe (10) eine Abweichung von einem Sollwert bestimmt wird, wobei der Sollwert einer vorgegebenen Anordnung und Ausgestaltung des Sekundärelementes (6) entspricht und die Ansteuerung der jeweiligen Induktionsspule (7) abhängig von der Abweichung von dem Sollwert korrigiert wird,
**dadurch gekennzeichnet, dass** für jede mit einem Sekundärelement (6) belegte Induktionsspule (7) zumindest ein elektromagnetischer Parameter mittels der Messbaugruppe (10) während des Erwärmungsvorganges mehrfach bestimmt wird, wobei abhängig von dem gemessenen Parameter der jeweiligen Induktionsspule (7) eine angepasste elektrische Leistung zugeführt wird und
wobei aus der zeitlichen Veränderung des zumindest einen für jede mit einem Sekundärelement (6) belegten Induktionsspule (7) bestimmten Parameters eine Abschätzung der Temperatur einer jeweils zugeordneten Lebensmittelportion (5) erfolgt.

2. Verfahren nach Anspruch 1, **dadurch gekennzeichnet, dass** für jede Induktionsspule (7) mittels der Messbaugruppe (10) der zugeführte Strom und/oder die zugeführte Spannung als elektromagnetischer Parameter bestimmt wird/werden.

3. Verfahren nach Anspruch 1 oder 2, **dadurch gekennzeichnet, dass** Geschirrteile jeweils in der Reichweite einer zugeordneten Induktionsspule (7) angeordnet werden, wobei den Geschirrteilen jeweils ein Sekundärelement (6) zugeordnet ist.

4. Verfahren nach Anspruch 3, **dadurch gekennzeichnet, dass** die Geschirrteile in einem Tabletttransportwagen (2) auf Tabletts (3) bereitgestellt werden, wobei der Tabletttransportwagen (2) mit dem Induktionsgerätemodul (1) gekoppelt wird.

5. Verfahren nach Anspruch 3 oder 4, **dadurch gekennzeichnet, dass** nach der Anordnung der Geschirrteile jeweils in der Reichweite einer zugeordneten Induktionsspule (7) und vor Beginn des Erwärmungsvorganges eine Pause vorgesehen ist, wobei die Belegungserkennung unmittelbar zu Beginn der Pause erfolgt.

6. Verfahren nach einem der Ansprüche 1 bis 5, **dadurch gekennzeichnet, dass** die Sekundärelemente (6) oder damit versehene Geschirrteile mit einer individuellen Codierung versehen sind, wobei die jeweils einem Sekundärelement (6) zugeordneten Speisen bei einer Portionierung in einer zentralen Steuerung mit der jeweiligen Codierung verknüpft werden und wobei die zentrale Steuerung nachfolgend bei dem Erwärmungsvorgang anhand der Codierung eine für die jeweiligen Speisen angepasste Erwärmung mittels der entsprechenden Induktionsspule (7) bewirkt.

7. Verfahren nach einem der Ansprüche 1 bis 6, **dadurch gekennzeichnet, dass** den mit einem Sekundärelement (6) belegten Induktionsspulen (7) während des Erwärmungsvorganges eine elektrische Leistung zwischen 10 Watt und 200 Watt zugeführt wird.

8. Verfahren nach einem der Ansprüche 1 bis 7, **dadurch gekennzeichnet, dass** die den einzelnen Induktionsspulen (7) im Mittel zugeführte elektrische Leistung durch eine Pulsweitenmodulation verändert wird.

9. Induktionsgerätemodul (1) zur Durchführung des Verfahrens gemäß einem der Ansprüche 1 bis 8 mit einer Vielzahl von Induktionsspulen (7), die jeweils zur Erwärmung eines zugeordneten Sekundärelementes (6) vorgesehen sind, einer elektrischen Schaltung zur Versorgung der Induktionsspulen (7) mit einem Wechselstrom, wobei die elektrische Schaltung eine Wechselstromerzeugung, eine Steuerelektronik und eine Messbaugruppe (10) umfasst und wobei die Messbaugruppe (10) und die Steuerelektronik dazu eingerichtet sind, die Belegung der einzelnen Induktionsspulen (7) mit einem zugeordneten Sekundärelement (6) zu überprüfen, **dadurch gekennzeichnet, dass** jeder Induktionsspule (7) eine eigene Endstufe (12) in Form eines Transistors vorgeschaltet ist, wobei die elektrische Schaltung zu einer variablen Ansteuerung der einzelnen Induktionsspulen (7) eingerichtet ist, und wobei das Induktionsgerätemodul dazu ausgebildet ist, ein Verfahren nach einem der vorhergehenden Ansprüche durchzuführen.

10. Induktionsgerätemodul nach Anspruch 9, **dadurch gekennzeichnet, dass** als Endstufe (12) ein Bipolartransistor mit isolierter Gate-Elektrode (IGBT) oder ein Metall-Oxid-Halbleiter-Feldeffekttransistor (MOSFET), vorgesehen ist.

11. Induktionsgerätemodul nach Anspruch 9 oder 10, **gekennzeichnet durch** sechs oder acht Induktionsspulen (7).

12. Induktionsgerätemodul nach einem der Ansprüche 9 bis 11, **gekennzeichnet durch** eine Eingabeschnittstelle zur Vorgabe unterschiedlicher Leistungskurven.

13. Induktionsgerätemodul nach einem der Ansprüche 9 bis 12, **gekennzeichnet durch** eine Ausgabeschnittstelle.

14. Induktionsgerätemodul nach einem der Ansprüche 9 bis 13, **dadurch gekennzeichnet, dass** die Frequenz des Wechselstroms zwischen 20 kHz und 50 kHz beträgt.

15. Induktionsgerätemodul nach einem der Ansprüche 9 bis 14, **dadurch gekennzeichnet, dass** die Induktionsspulen (7) jeweils an einen Resonanzkreis zur Impedanzanpassung angeschlossen sind.

16. Induktionsgerät mit einer Vielzahl von Induktionsgerätemodulen (1) nach einem der Ansprüche 9 bis 15.

## Claims

1. A method for heating food stuffs using an induction device module (1), which comprises at least two induction coils (7) provided for heating an assigned secondary element (6) and an electrical circuit,
wherein detection of the assignment is performed by means of a measuring assembly (10), whereby it is ascertained for each of the induction coils (7), whether this is fitted with a secondary element (6) heatable by induction, and
wherein induction coils (7) not fitted with a secondary element (6) are deactivated,
wherein
in addition to detection of the assignment at the beginning of the heating operation or prior to the heating operation a deviation from a set value is determined for each induction coil (7) fitted with a secondary element (6) and for at least one electromagnetic parameter by means of the measuring assembly (10), wherein the set value corresponds to a specified arrangement and design of the secondary element (6) and activation of the respective induction coil (7) is corrected depending on the deviation from the set value,
**characterised in that** for each induction coil (7) fitted with a secondary element (6) at least one electromagnetic parameter is determined multiple times by means of the measuring assembly (10) during the heating operation, wherein depending on the measured parameter of the respective induction coil (7) an adjusted electrical power is supplied, and
wherein from the temporal change of the at least one parameter determined for each induction coil (7) fitted with a secondary element (6) an estimate of the temperature of a respectively assigned food portion (5) is performed.

2. The method according to claim 1, **characterised in that** for each induction coil (7) the supplied current and/or the supplied voltage is/are determined as an electromagnetic parameter by means of the measuring assembly (10).

3. The method according to claim 1 or 2, **characterised in that** tableware parts are arranged respectively within reach of an assigned induction coil (7), wherein the tableware parts have a secondary element (6) assigned to them, respectively.

4. The method according to claim 3, **characterised in that** the tableware parts are made available in a tray transport trolley (2) on trays, wherein the tray transport trolley (2) is coupled to the induction device module (1).

5. The method according to claim 3 or 4, **characterised in that** following arrangement of the tableware parts respectively within reach of an assigned induction coil (7) and prior to the start of the heating operation a pause is provided, wherein detection of the assignment is provided directly at the beginning of the pause.

6. The method according to one of claims 1 to 5, **characterised in that** the secondary elements (6) or tableware parts provided therewith are provided with an individual coding, wherein the food dishes respectively assigned to a secondary element (6) for portioning in a central control are linked to the respective coding and wherein the central control, subsequently during the heating operation by way of the coding, causes heating-up that is adapted for the respective dishes by means of the respective induction coil (7) .

7. The method according to one of claims 1 to 6, **characterised in that** during the heating operation the induction coils (7) fitted with a secondary element (6) are supplied with an electrical power between 10 watt and 200 watt.

8. The method according to one of claims 1 to 7, **characterised in that** the electrical power supplied on average to the individual induction coils (7) is varied by a pulse width modulation.

9. An induction device module (1) for performing the method according to one of claims 1 to 8 with a plurality of induction coils (7), which are each provided for heating an assigned secondary element (6), an electrical circuit for supplying the induction coils (7) with an alternating current, wherein the electrical circuit comprises an alternating current generator, a control electronics and a measuring assembly (10), and wherein the measuring assembly (10) and the control electronics are arranged to check that the individual induction coils (7) are fitted with an assigned secondary element (6), **characterised in that** each induction coil (7) has an own output stage (12) in form of a transistor arranged upstream thereof, wherein the electrical circuit is arranged for variable activation of the individual induction coils (7), and wherein the induction device module is designed to perform a method according to one of the preceding claims.

10. The induction device module according to claim 9, **characterised in that** the output stage (12) provided is a bipolar transistor with insulated gate electrode (IGBT) or a metal oxide semiconductor field-effect transistor (MOSFET).

11. The induction device module according to claim 9 or 10, **characterised by** six or eight induction coils (7).

12. The induction device module according to one of claims 9 to 11, **characterised by** an input interface for specifying different power curves.

13. The induction device module according to one of claims 9 to 12, **characterised by** an output interface.

14. The induction device module according to one of claims 9 to 13, **characterised in that** the frequency of the alternating current is between 20 kHz and 50 kHz.

15. The induction device module according to one of claims 9 to 14, **characterised in that** the induction coils (7) are each connected to a resonance circuit for impedance adjustment.

16. An induction device with a plurality of induction device modules (1) according to one of claims 9 to 15.

## Revendications

1. Procédé de réchauffage de denrées alimentaires par un module d'appareil à induction (1), lequel comprend au moins deux bobines d'induction (7) prévues respectivement pour réchauffer un élément secondaire (6) attribué et un circuit électrique,
sachant qu'au moyen d'un module de mesure (10), une identification d'occupation a lieu pour laquelle il est déterminé pour chacune des bobines d'induction (7) si celle-ci est occupée par un élément secondaire (6) réchauffable par induction, et
sachant que les bobines d'induction (7) non occupées par un élément secondaire (6) sont désactivées,
sachant qu'
en plus de l'identification d'occupation au début de l'opération de réchauffage ou avant l'opération de réchauffage pour chacune des bobines d'induction (7) occupées avec un élément secondaire (6) et pour au moins un paramètre électromagnétique, un écart de la valeur théorique est déterminé au moyen du module de mesure (10), sachant que la valeur théorique correspond à un agencement et une configuration prédéfinis de l'élément secondaire (6) et l'activation de la bobine d'induction (7) respective est corrigée en fonction de l'écart de la valeur théorique,
**caractérisé en ce que** pour chaque bobine d'induction (7) occupée par un élément secondaire (6) au moins un paramètre électromagnétique est déterminé plusieurs fois au moyen du module de mesure (10) pendant l'opération de réchauffage, sachant qu'une puissance électrique adaptée est délivrée en fonction du paramètre mesuré de la bobine d'induction (7) respective, et
sachant qu'une estimation de la température d'une portion de denrée alimentaire (5) respectivement attribuée a lieu à partir de la modification temporelle d'au moins un paramètre déterminé pour chaque bobine d'induction (7) occupée par un élément secondaire (6).

2. Procédé selon la revendication 1, **caractérisé en ce que** pour chaque bobine d'induction (7), le courant délivré et/ou la tension délivrée est/sont déterminé(s) au moyen du module de mesure (10) en tant que paramètre électromagnétique.

3. Procédé selon la revendication 1 ou 2, **caractérisé en ce que** les pièces de vaisselle sont disposées respectivement à portée d'une bobine d'induction (7) attribuée, sachant qu'un élément secondaire (6) est à chaque fois attribué aux pièces de vaisselle.

4. Procédé selon la revendication 3, **caractérisé en ce que** les pièces de vaisselle sont préparées dans un chariot de transport de plateaux (2) sur des plateaux (3), sachant que le chariot de transport de plateaux (2) est couplé au module d'appareil à induction (1).

5. Procédé selon la revendication 3 ou 4, **caractérisé en ce qu'**une pause est prévue après mise en place des pièces de vaisselle respectivement à portée d'une bobine d'induction (7) attribuée et avant le début de l'opération de réchauffage, sachant que l'identification d'occupation a lieu directement au début de la pause.

6. Procédé selon l'une quelconque des revendications 1 à 5, **caractérisé en ce que** les éléments secondaires (6) ou les pièces de vaisselle dotées de celui-ci sont dotés d'une codification individuelle, sachant que les plats attribués respectivement à un élément secondaire (6) lors d'un portionnement sont reliés dans une commande centrale à la codification respective et sachant que la commande centrale produit ultérieurement lors de l'opération de réchauffage au moyen de la bobine d'induction correspondante (7) le réchauffage adapté pour les plats respectifs à l'aide de la codification.

7. Procédé selon l'une quelconque des revendications 1 à 6, **caractérisé en ce qu'**une puissance électrique variant entre 10 Watt et 200 Watt est délivrée aux bobines d'induction (7) occupées par un élément secondaire (6) pendant l'opération de chauffage.

8. Procédé selon l'une quelconque des revendications 1 à 7, **caractérisé en ce que** la puissance électrique délivrée en moyenne aux bobines d'induction individuelles (7) est modifiée par une modulation d'impulsion en largeur.

9. Module d'appareil à induction (1) pour exécuter le procédé selon l'une quelconque des revendications 1 à 8 avec une pluralité de bobines d'induction (7), qui sont respectivement prévues pour réchauffer un élément secondaire (6) attribué, un circuit électrique pour alimenter les bobines d'induction (7) en courant alternatif, sachant que le circuit électrique comprend une production de courant alternatif, un système électronique de commande et un module de mesure (10) et sachant que le module de mesure (10) et le système électronique de commande sont agencés pour vérifier l'occupation des bobines d'induction individuelles (7) par un élément secondaire attribué (6), **caractérisé en ce qu'**un niveau finale propre (12) sous la forme d'un transistor est connecté en amont de chaque bobine d'induction (7), sachant que le circuit électrique est agencé pour une activation variable des bobines d'induction individuelles (7) et sachant que le module d'appareil à induction est constitué pour exécuter un procédé selon l'une quelconque des revendications précédentes.

10. Module d'appareil à induction selon la revendication 9, **caractérisé en ce qu'**un transistor bipolaire avec électrode à grille isolée (IGBT) ou un transistor oxyde métallique à semiconducteurs à effet de champ (MOSFET) est prévu en tant que niveau final (12).

11. Module d'appareil à induction selon la revendication 9 ou 10, **caractérisé par** six ou huit bobines d'induction (7) .

12. Module d'appareil à induction selon l'une quelconque des revendications 9 à 11, **caractérisé par** une interface d'entrée pour l'attribution préalable des différentes courbes de puissance.

13. Module d'appareil à induction selon l'une quelconque des revendications 9 à 12, **caractérisé par** une interface de sortie.

14. Module d'appareil à induction selon l'une quelconque des revendications 9 à 13, **caractérisé en ce que** la fréquence du courant alternatif se situe entre 20 kHz et 50 kHz.

15. Module d'appareil à induction selon l'une quelconque des revendications 9 à 14, **caractérisé en ce que** les bobines d'induction (7) sont respectivement raccordées à un circuit de résonance pour l'adaptation d'impédance.

16. Appareil à induction avec une pluralité de modules d'appareil à induction (1) selon l'une quelconque des revendications 9 à 15.
